# EUROPEAN PATENT APPLICATION

(11) **EP 2 582 180 A1**
(43) Date of publication of application: **17.04.2013**
(21) Application number: 11792512.3
(22) Date of filing: 09.06.2011
(51) Int. Cl.: H04W 36/22, H04W 36/24, H04W 36/38

(54) **RADIO COMMUNICATION SYSTEM, RADIO BASE STATION, RADIO TERMINALS AND COMMUNICATION CONTROL METHOD**

(30) Priority: 09.06.2010 JP 2010131886
(71) Applicant: Kyocera Corporation, Kyoto-shi Kyoto 612-8501 (JP)
(72) Inventor: KITAJI, Mitsuhiro, Kyoto 612-8501 (JP)
(74) Representative: Schwabe - Sandmair - Marx
(86) International application number: PCT/JP2011/063221
(87) International publication number: WO 2011/155555

(57) **Abstract**

Each of a plurality of radio terminals (UE 30-1) connected to a radio base station (eNB 10-1) measures a throughput during execution of an application of the radio terminal, and transmits, to the radio base station (eNB 10-1), information of throughput sufficiency that is a ratio of the measured throughput to a required throughput. The radio base station (eNB 10-1) receives the information of throughput sufficiency from each of the radio terminals (UE 30-1), and performs, based on the received information of throughput sufficiency, a handover procedure for the radio terminals (UE 30-1).

## Description

### [Technical Field]

The present invention relates to a radio communication technology, and more particularly, to a radio communication system that performs handover of a radio terminal, a radio base station, a radio terminal, and a communication control method.

### [Background Art]

In an LTE (Long Term Evolution) being standardized in 3GPP (3rd Generation Partnership Project) which is a group aiming to standardize a radio communication system, a technology called SON (Self Organizing Network) is employed. According to the SON, it is expected to automatize the installation or maintenance of a radio base station without measurement or setting in a field by manpower (for example, refer to Non Patent Literature 1).

In the SON, in order to equalize a load between radio base stations (called "eNB" in the 3GPP), there has been proposed a technique of adjusting a coverage on the basis of load information transmitted/received between the radio base stations. In the technique of adjusting the coverage, when there exist a radio base station with a high load and a radio base station with a low load at the time of handover, a radio terminal connected to the radio base station with a high load is allowed to be handed over to the radio base station with a low load.

However, in the technique of performing handover on the basis of the load information, there is the following problem. Specifically, there is a problem that throughput of a radio terminal, which is connected to a first radio base station, and throughput of a radio terminal, which is connected to a second radio base station, are not considered even although a load of the first radio base station and a load of the second radio base station are equalized.

### [Citation List]

### [Non Patent Literature]

[Non Patent Literature 1] 3GPP TR 36.902 V9.1.0 April, 2010

### [Summary of Invention]

A radio communication system according to a first feature comprises: a radio base station (radio base station eNB 10-1); and a radio terminal (radio terminal UE 30-1) connected to the radio base station. The radio terminal comprises: a transmission unit (radio communication unit 210) configured to transmit first information (throughput satisfied level information) on an execution state of an application in the radio terminal to the radio base station. The first information indicates a degree of throughput when the radio terminal performed the application relative to throughput required when the radio terminal performs the application. The radio base station comprises: a reception unit (radio communication unit 110) configured to receive the first information from the radio terminal; and a control unit (handover control unit 122) configured to perform a handover procedure for the radio terminal on the basis of the first information received by the reception unit.

According to the first characteristic, a radio base station acquires the degree of throughput when a radio terminal performed an application relative to throughput required when the radio terminal performs the application, from the radio terminal connected to the radio base station, and performs a handover procedure for the radio terminal on the basis of the degree indicating first information of the radio terminal. Consequently, the radio base station is able to consider throughput in a radio terminal in handover of the radio terminal.

In the first feature, the control unit performs a handover procedure for switching a connection destination of the radio terminal from the radio base station to another radio base station, when the degree, indicated by the first information, of the throughput when the radio terminal performed the application relative to the throughput required when the radio terminal performs the application is smaller than a predetermined value.

In the first feature, the radio base station comprises: a switch unit configured to transmit the first information to the another radio base station, and configured to receive second information on an execution state of an application in another radio terminal, which is connected to the another radio base station, from the another radio base station. The second information indicates a degree of throughput when the another radio terminal performed the application relative to throughput required when the another radio terminal performs the application.

In the first feature, the control unit performs a handover procedure for switching a connection destination of the radio terminal from the radio base station to the another radio base station, when the degree, indicated by the first information, of the throughput when the radio terminal performed the application relative to the throughput required when the radio terminal performs the application is smaller than the degree, indicated by the second information received by the switch unit, of the throughput when the another radio terminal performed the application relative to the throughput required when the another radio terminal performs the application,.

In the first feature, the radio base station is connected to a plurality of radio terminals. The control unit acquires third information on an execution state of an application in the whole of the plurality of radio terminals on the basis of the first information from each of the plurality of radio terminals. The third information indicates a degree of throughput when the plurality of radio terminals performed the application relative to throughput required when the plurality of radio terminals perform the application. The control unit performs a handover procedure for the radio terminal on the basis of the third information.

In the first feature, the radio terminal comprises: a storage unit (storage unit 230) configured to store data to be processed in an execution of the application. The transmission unit transmits the first information to the radio base station, which indicates the throughput when the radio terminal performed the application satisfies the throughput required when the radio terminal performs the application, when a difference between an input speed of data to the storage and an output speed of data from the storage unit is in a predetermined range.

In the first feature, the degree of the throughput when the radio terminal performed the application relative to the throughput required when the radio terminal performs the application is subject to weighting corresponding to a codec rate of the data to be processed in the execution of the application.

A radio communication system according to a second feature comprises: a radio base station; and a radio terminal connected to the radio base station. The radio terminal comprises: a transmission unit configured to transmit information on an execution state of an application in the radio terminal to the radio base station. The information indicates a degree of throughput when the radio terminal performed the application relative to throughput required when the radio terminal performs the application. The radio base station comprises: a reception unit configured to receive the information from the radio terminal.

A radio base station according to a third feature is connected to a radio terminal, and comprises: a reception unit configured to receive information on an execution state of an application in the radio terminal from the radio terminal; the information being indicative of a degree of throughput when the radio terminal performed the application relative to throughput required when the radio terminal performs the application, and a control unit configured to perform a handover procedure for the radio terminal on the basis of the information received by the reception unit.

A radio terminal according to a fourth feature is connected to a radio base station, and comprises: a transmission unit configured to transmit information on an execution state of an application in the radio terminal to the radio base station. The information indicates a degree of throughput when the radio terminal performed the application relative to throughput required when the radio terminal performs the application.

A communication control method according to the fifth feature is used in a radio communication system including a radio base station and a radio terminal connected to the radio base station. The communication control method comprises the steps of: transmitting, by the radio terminal, information on an execution state of an application in the radio terminal to the radio base station; the information being indicative of a degree of throughput when the radio terminal performed the application relative to throughput required when the radio terminal performs the application, receiving, by the radio base station, the information from the radio terminal; and performing, by the radio base station, a handover procedure for the radio terminal on the basis of the received information.

### [Brief Description of Drawings]

Fig. 1 is a diagram for explaining the overview of an LTE system according to an embodiment of the present invention.
Fig. 2 is a schematic configuration diagram of a radio communication system according to the embodiment of the present invention.
Fig. 3 is a block diagram illustrating the configuration of a radio base station according to the embodiment of the present invention.
Fig. 4 is a block diagram illustrating the configuration of a radio terminal according to the embodiment of the present invention.
Fig. 5 is an operation sequence diagram illustrating the operation of the radio communication system according to the embodiment of the present invention.

### [Description of Embodiments]

Next, an embodiment of the present invention will be described with reference to the drawings. Specifically, (1) Overview of LTE system, (2) Configuration of radio communication system, (3) Configuration of radio base station, (4) Configuration of radio terminal, (5) Operation of radio communication system, (6) Operation and effect, and (7) Other embodiments will be described. It is to be noted that the same or similar reference numerals are applied to the same or similar parts through the drawings in the following embodiments.

### (1) Overview of LTE system

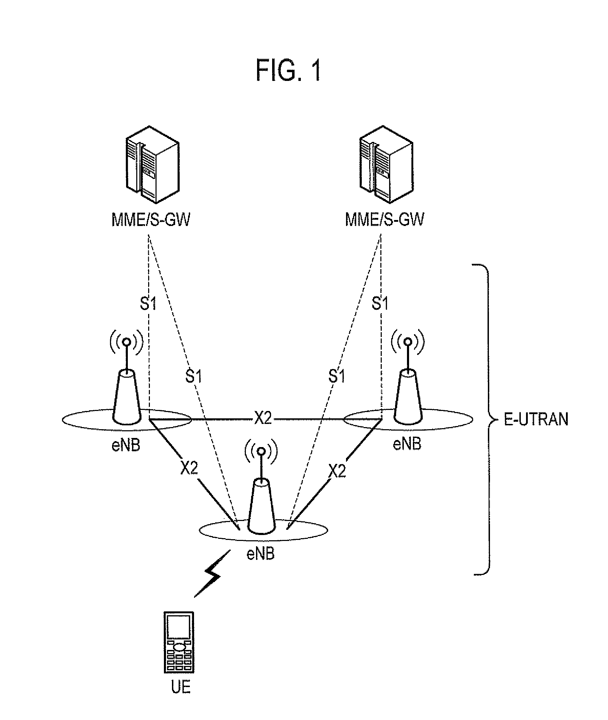

Fig. 1 is a diagram for explaining the overview of an LTE system. As illustrated in Fig. 1, a plurality of radio base stations eNB constitute E-UTRAN (Evolved-UMTS Terrestrial Radio Access Network). Each of the plurality of radio base stations eNB forms a cell that is a communication area where a service should be provided to a radio terminal UE.

The radio terminal UE is a radio communication device which a user has, and it is also called as "User Equipment". The radio terminal UE measures quality (that is, radio quality) of a radio signal received from a radio base station eNB, and transmits a report (hereinafter, a measurement result report) of a measurement result of the radio quality to a radio base station eNB serving as a connection destination.

Such radio quality includes reference signal received power (RSRP), signal-to-interference noise ratio (SINR) and the like. The measurement result report based on the RSRP is called a measurement report, and the measurement result report based on an index of the SINR in each specific frequency band is called CQI (Channel Quality Indicator).

The radio base station eNB, which serves as a connection destination of the radio terminal UE, performs a handover procedure for switching the connection destination of the radio terminal UE on the basis of the measurement report received from the radio terminal UE. When the radio terminal UE receives a reference signal from a plurality of radio base stations eNB, the measurement report includes a plurality of RSRPs corresponding to the plurality of radio base stations eNB. The radio base station eNB, which serves as the connection destination of the radio terminal UE, normally selects a radio base station eNB with the highest RSRP, among the plurality of radio base stations eNB, as the connection destination of the radio terminal UE.

Furthermore, the radio base station eNB, which serves as a connection destination of the radio terminal UE, assigns a resource block, which is an assignment unit of a radio resource, to the radio terminal UE on the basis of the CQI received from the radio terminal UE. Moreover, the radio base station eNB, which serves as a connection destination of the radio terminal UE, determines a modulation class to be used in radio communication with the radio terminal UE, based on the CQI received from the radio terminal UE. The modulation class is a combination of a modulation level and a coding rate.

The radio base stations eNB are able to communicate with one another through an X2 interface which is a logical communication path for providing inter-base station communication. Each of the plurality of radio base stations eNB is able to communicate with EPC (Evolved Packet Core), specifically, MME (Mobility Management Entity)/S-GW (Serving Gateway), through an S1 interface.

### (2) Configuration of radio communication system

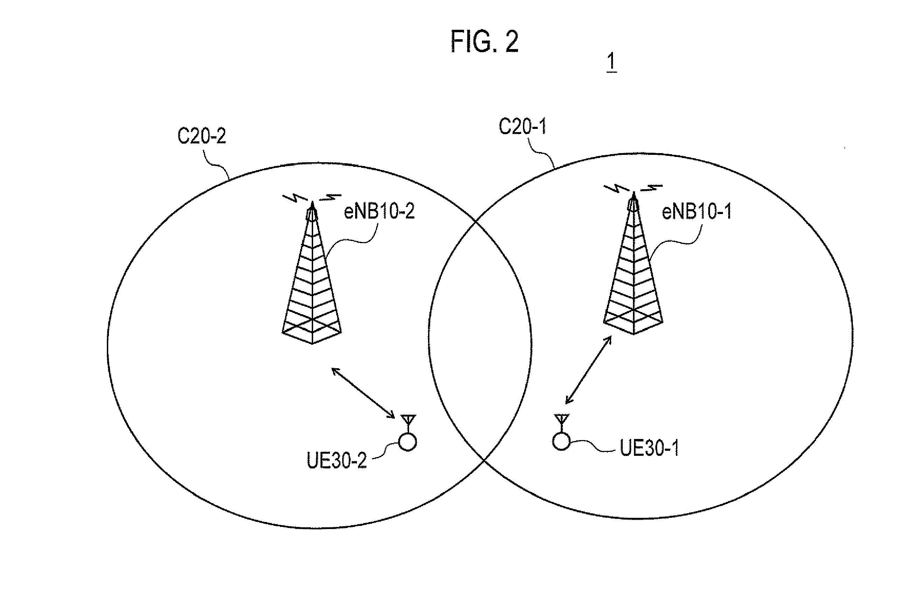

Fig. 2 is a schematic configuration diagram of a radio communication system 1 according to the present embodiment.

As illustrated in Fig. 2, the radio communication system 1 includes a radio base station eNB10-1, a radio terminal UE30-1 connected to the radio base station eNB10-1 in a cell C20-1 formed by the radio base station eNB10-1, and a radio terminal UE30-2 connected to a radio base station eNB10-2 in a cell C20-2 formed by the radio base station eNB10-2. The radio base station eNB10-1 and the radio base station eNB10-2 are able to perform inter-base station communication using the aforementioned X2 interface. In addition, Fig. 2 illustrates only one radio terminal UE30-1 and only one radio terminal UE30-2. However, actually, it is assumed that there exist a plurality of the radio terminals UE30-1 and a plurality of the radio terminals UE30-2.

In the present embodiment, as well as the adjustment of a handover parameter based on the aforementioned load information, each radio base station eNB performs a handover procedure of the radio terminal UE on the basis of the degree of throughput (hereinafter, referred to as actually measured throughput), which is measured when a radio terminal UE performed an application, relative to throughput (hereinafter, referred to as required throughput) which is required when the radio terminal UE connected to the radio base station eNB performs the application.

### (3) Configuration of radio base station

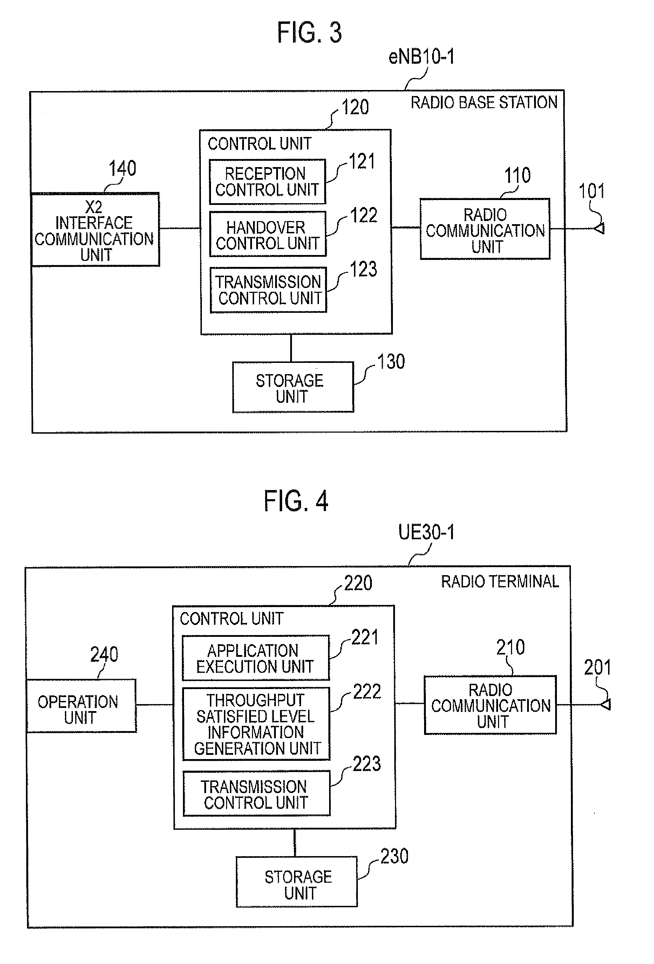

Next, the configuration of the radio base station eNB10-1 will be described. Fig. 3 is a block diagram illustrating the configuration of the radio base station eNB10-1 according to the present embodiment. The radio base station eNB10-2 also has the same configuration as that of the radio base station eNB10-1.

As illustrated in Fig. 3, the radio base station eNB10-1 includes an antenna unit 101, a radio communication unit 110, a control unit 120, a storage unit 130, and an X2 interface communication unit 140.

The antenna unit 101 is used for transmitting and receiving a radio signal. The radio communication unit 110 includes, for example, a radio frequency (RF) circuit and a baseband (BB) circuit, and transmits/receives a radio signal to/from a radio terminal UE through the antenna unit 101. Furthermore, the radio communication unit 110 modulates a transmitted signal and demodulates a received signal.

The control unit 120 is configured by CPU, for example,, and controls various functions of the radio base station eNB10-1. The storage unit 130 is configured by a memory, for example, and stores various types of information used for the control and the like of the radio base station eNB10-1. The X2 interface communication unit 140 performs inter-base station communication with another radio base station eNB10-2 using an X2 interface.

The control unit 120 includes a reception control unit 121, a handover control unit 122, and a transmission control unit 123.

The radio communication unit 110 receives a throughput satisfied level information message, which is transmitted from each radio terminal UE30-1 connected to the radio base station eNB10-1, through the antenna unit 101. The throughput satisfied level information indicates the degree (hereinafter, referred to as a throughput satisfied level) of throughput (actually measured throughput), which is measured when the radio terminal UE30-1 (a transmission source) performed an application, relative to throughput (required throughput) which is required when the radio terminal UE30-1 performs the application. Furthermore, the throughput generally indicates the amount of communication data per a unit time, and in the present embodiment, the throughput indicates throughput between the radio base station eNB and the radio terminal UE. The radio communication unit 110 outputs the received throughput satisfied level information to the handover control unit 122.

The handover control unit 122 recognizes a throughput satisfied level in each radio terminal UE30-1 for each radio terminal UE30-1 on the basis of the throughput satisfied level information message input from each radio terminal UE30-1. Next, the handover control unit 122 calculates an average value of the recognized throughput satisfied levels. The average value (hereinafter, referred to as a first entire throughput satisfied level) indicates the degree of actually measured throughput relative to entire required throughput of a plurality of the radio terminals UE30-1 connected to the radio base station eNB10-1.

The handover control unit 122 determines whether the first entire throughput satisfied level is smaller than a first threshold value. The first threshold value is a minimum value of the first entire throughput satisfied level when the radio terminals UE30-1 connected to the radio base station eNB10-1 are not allowed to be handed over to another radio base station eNB10-2. The first threshold value is stored in the storage unit 130 in advance.

When the first entire throughput satisfied level is smaller than the first threshold value, the handover control unit 122 recognizes that it is necessary to allow the radio terminals UE30-1 connected to the radio base station eNB10- to be handed over to the radio base station eNB10-2. Moreover, the handover control unit 122 selects some of the radio terminals UE30-1 connected to the radio base station eNB10- as an object to be handed over. For example, the handover control unit 122 selects, as an object to be handed over, a radio terminal UE30-1 in which the corresponding throughput satisfied level is lowest among the radio terminals UE30-1 connected to the radio base station eNB10-1, or a predetermined number of radio terminals UE30-1 in which the corresponding throughput is low.

The transmission control unit 123 outputs a Handover Request message, which includes information on the first entire throughput satisfied level and requests the radio base station eNB10-1 to serve as a handover destination of the radio terminal UE30-1 which is an object to be handed over, to the X2 interface communication unit 140. Moreover, the transmission control unit 123 controls the X2 interface communication unit 140 such that the Handover Request message is transmitted to the radio base station eNB0-2.

The X2 interface communication unit 140 transmits the Handover Request message including the first entire throughput satisfied level information to the radio base station eNB10-2 through the X2 interface under the control of the transmission control unit 123.

Then, the radio base station eNB10-2 performs the following processes. An X2 interface communication unit 140 of the radio base station eNB10-2 receives the Handover Request message including the first entire throughput satisfied level information. Next, similarly to the aforementioned handover control unit 122 of the radio base station eNB10-1, an handover control unit 122 of the radio base station eNB10-2 recognizes a throughput satisfied level in each radio terminal UE30-2 for each radio terminal UE30-2 on the basis of the throughput satisfied level information message of each radio terminal UE30-2 connected to the radio base station eNB10-2. Then, the handover control unit 122 of the radio base station eNB10-2 calculates an average value of the recognized throughput satisfied levels. The average value (hereinafter, referred to as a second entire throughput satisfied level) indicates the degree of actually measured throughput relative to entire required throughput of a plurality of the radio terminals UE30-2 connected to the radio base station eNB10-2.

A transmission control unit 123 of the radio base station eNB10-2 outputs a Handover Request Ack message, which includes information on the second entire throughput satisfied level, to the X2 interface communication unit 140 as a response of the Handover Request message. Moreover, the transmission control unit 123 controls the X2 interface communication unit 140 of the radio base station eNB10-2 such that the Handover Request Ack message is transmitted to the radio base station eNB10-1. The X2 interface communication unit 140 of the radio base station eNB10-2 transmits the Handover Request Ack message including the second entire throughput satisfied level information to the radio base station eNB10-1 through the X2 interface under the control of the transmission control unit 123.

Then, the radio base station eNB10-1 performs the following processes. The X2 interface communication unit 140 receives the Handover Request Ack message including the second entire throughput satisfied level information, and outputs the Handover Request Ack message to the handover control unit 122.

When the second entire throughput satisfied level information is input, the handover control unit 122 determines whether the first entire throughput satisfied level is smaller than the second entire throughput satisfied level.

In the case in which the first entire throughput satisfied level is equal to or more than the second entire throughput satisfied level, when a connection destination of the radio terminal UE30-1 connected to the radio base station eNB10-1 is switched to the radio base station eNB10-2 through handover, the throughput of remaining radio terminals UE30-1 connected to the radio base station eNB10-1 may be expected to be improved. However, the throughput of the radio terminals UE30-2 connected to the radio base station eNB10-2 is likely to be further reduced because the radio terminal UE30-1 is newly connected to the radio base station eNB10-2 regardless of low throughput before the handover, so that the throughput between the radio base station eNB10-1 and the radio base station eNB10-2 is not equalized.

Therefore, when the first entire throughput satisfied level is equal to or more than the second entire throughput satisfied level, a handover procedure for switching the connection destination of the radio terminal UE30-1 to the radio base station eNB10-2 is not performed.

Meanwhile, in the case in which the first entire throughput satisfied level is smaller than the second entire throughput satisfied level, when the connection destination of the radio terminal UE30-1 connected to the radio base station eNB10-1 is switched to the radio base station eNB10-2 through handover, the throughput of remaining radio terminals UE30-1 connected to the radio base station eNB10-1 may be expected to be improved. Furthermore, the throughput of the radio terminals UE30-2 connected to the radio base station eNB10-2 is reduced because the radio terminal UE30-1 is newly connected to the radio base station eNB10-2, but the throughput between the radio base station eNB10-1 and the radio base station eNB10-2 can be equalized.

Therefore, when the first entire throughput satisfied level is smaller than the second entire throughput satisfied level, the handover control unit 122 generates a Handover command message for instructing handover of the radio terminal UE30-1 which is an object to be handed over. Moreover, the handover control unit 122 outputs the Handover command message to the radio communication unit 110. The radio communication unit 110 transmits the Handover command message to the radio terminal UE30-1, which is an object to be handed over, through the antenna unit 101.

### (4) Configuration of radio terminal

Next, the configuration of the radio terminal UE30-1 will be described. Fig. 4 is a block diagram illustrating the configuration of the radio terminal UE30-1 according to the present embodiment. The radio terminal UE30-2 also has the same configuration as that of the radio terminal UE30-1.

As illustrated in Fig. 4, the radio terminal UE30-1 includes an antenna unit 201, a radio communication unit 210, a control unit 220, a storage unit 230, and an operation unit 240.

The antenna unit 201 is used for transmitting and receiving a radio signal. The radio communication unit 210 includes, for example, a radio frequency (RF) circuit and a baseband (BB) circuit, and transmits/receives a radio signal to/from the radio base station eNB through the antenna unit 201. Furthermore, the radio communication unit 210 modulates the transmitted signal and demodulates the received signal.

The control unit 220 is configured by CPU, for example, and controls various functions of the radio terminal UE30-1. The storage unit 230 is configured by a memory, for example, and stores various types of information used for the control and the like of the radio terminal UE30-1. The operation unit 240 is configured by a numerical keypad, a function key and the like, and serves as an interface used for inputting operation content of a user.

The control unit 220 includes an application execution unit 221, a throughput satisfied level information generation unit 222, and a transmission control unit 223.

When an operation signal corresponding to an application execution operation of the operation unit 240 by a user is input from the operation unit 240, the application execution unit 221 reads a program of an application from the storage unit 130 in response to the operation signal, and executes the application. Furthermore, the application to be executed includes an application which requires radio communication with the radio base station eNB10-1, such as Web browser, streaming reproduction of video or voice, and voice communication based on VoIP.

The throughput satisfied level information generation unit 222 acquires information on throughput (required throughput) required when the application execution unit 221 executes an application.

Specifically, the storage unit 230 stores the information on the required throughput in the execution of each application for each application executable by the radio terminal UE30-1. The throughput satisfied level information generation unit 222 recognizes the application being executed by the application execution unit 221, and reads information on required throughput corresponding to the application from the storage unit 230.

Alternatively, a user operates the operation unit 240 and performs an operation of setting the required throughput of the application to be executed by the application execution unit 221. In this case, the throughput satisfied level information generation unit 222 recognizes the application being executed by the application execution unit 221, and recognizes the required throughput corresponding to the application on the basis of the operation signal from the operation unit 240.

Next, the throughput satisfied level information generation unit 222 measures throughput between the radio base station eNB10-1 and the radio terminal UE30-1 while the application is being executed by the application execution unit 221. In the present embodiment, the throughput to be measured includes both uplink throughput and downlink throughput, or either the uplink throughput or the downlink throughput.

The throughput satisfied level information generation unit 222 divides the measured throughput (actually measured throughput) by the required throughput, thereby calculating a throughput satisfied level. In addition, when the throughput is measured for both the uplink throughput and the downlink throughput, the throughput satisfied level information generation unit 222 may divide actually measured throughput in the uplink direction by required throughput in the uplink direction to calculate a throughput satisfied level in the uplink direction, divide actually measured throughput in the downlink direction by required throughput in the downlink direction to calculate a throughput satisfied level in the downlink direction, and calculate an average value of the throughput satisfied level in the uplink direction and the throughput satisfied level in the downlink direction as the throughput satisfied level. In addition, the throughput satisfied level information generation unit 222 may convert a value, which is obtained by dividing the actually measured throughput by the required throughput, to discrete values of 1 to 10 and the like, and employ the value as the throughput satisfied level.

The throughput satisfied level information generation unit 222 performs weighting, which corresponds to a codec rate of data transmitted in the execution of the application, on the calculated throughput satisfied level. Specifically, the throughput satisfied level information generation unit 222 performs the weighting on the throughput satisfied level such that the fulfillment level is high as the codec rate is high, and generates throughput satisfied level information indicating the weighted throughput satisfied level.

The transmission control unit 223 outputs the throughput satisfied level information to the radio communication unit 210, and controls the radio communication unit 210 such that the throughput satisfied level information is transmitted to the radio base station eNB10-1. The radio communication unit 210 transmits the throughput satisfied level information to the radio base station eNB10-1 through the antenna unit 101 under the control of the transmission control unit 223.

Then, when the radio base station eNB10-1 transmitted the Handover command message to the radio terminal UE30-1, the radio communication unit 110 receives the Handover command message through the antenna unit 101. Moreover, the radio communication unit 110 outputs the Handover command message to the control unit 220.

When the Handover command message is input, the control unit 220 performs a handover procedure for switching a connection destination from the radio base station eNB10-1 to another radio base station eNB10-2 in response to the Handover command message.

### (5) Operation of radio communication system

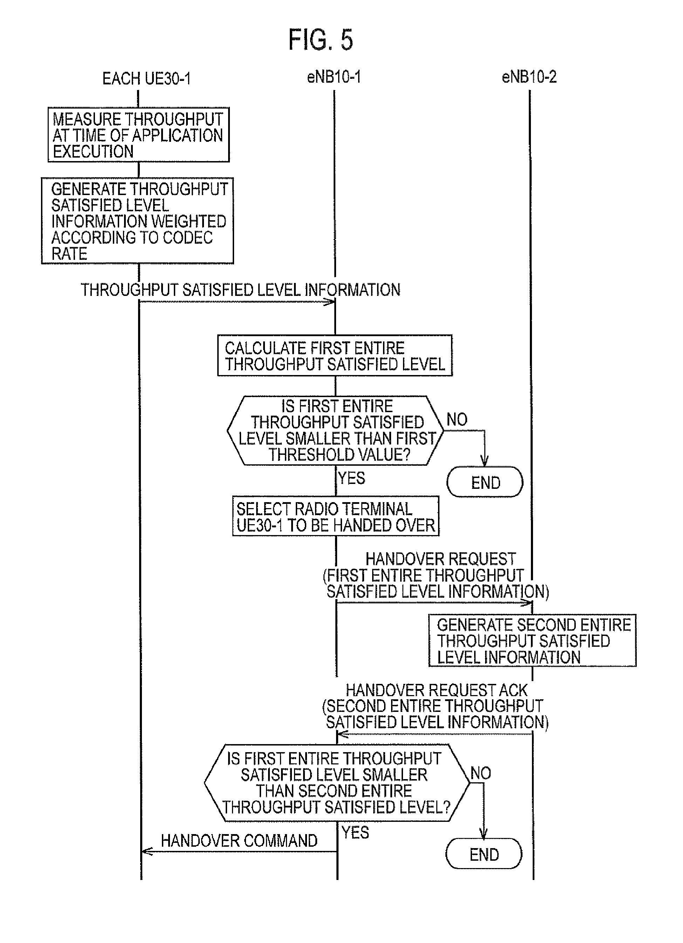

Fig. 5 is an operation sequence diagram illustrating the operation of the radio communication system 1 according to the present embodiment.

In step S101, the throughput satisfied level information generation unit 222 of the radio terminal UE30-1 measures throughput at the time of execution of an application.

In step S102, the throughput satisfied level information generation unit 222 of the radio terminal UE30-1 performs weighting on a throughput satisfied level according to a codec rate, and generates throughput satisfied level information indicating the weighted throughput satisfied level.

In step S103, the radio communication unit 210 of the radio terminal UE30-1 transmits the throughput satisfied level information to the radio base station eNB10-1 through the antenna unit 101. The radio communication unit 110 of the radio base station eNB10-1 receives the throughput satisfied level information from each radio terminal UE30-1 through the antenna unit 101.

In step S104, the handover control unit 122 of the radio base station eNB10-1 calculates the first entire throughput satisfied level on the basis of the throughput satisfied level information message of each radio terminal UE30-1.

In step S105, the handover control unit 122 of the radio base station eNB10-1 determines whether the first entire throughput satisfied level is smaller than the first threshold value. When the first entire throughput satisfied level is equal to or more than the first threshold value, a series of operations are completed.

Meanwhile, when the first entire throughput satisfied level is smaller than the first threshold value, the handover control unit 122 of the radio base station eNB10-1 selects a radio terminal UE30-1 to be handed over among radio terminals UE30-1 connected to the radio base station eNB10-1, in step S106.

In step S107, the X2 interface communication unit 140 of the radio base station eNB10-1 transmits the Handover Request message including information on the first entire throughput satisfied level under the control of the transmission control unit 123. An X2 interface communication unit 140 of the radio base station eNB10-2 receives the Handover Request message including the first entire throughput satisfied level information.

In step S108, the handover control unit 122 of the radio base station eNB10-2 generates information on the second entire throughput satisfied level on the basis of a throughput satisfied level information message of each radio terminal UE30-2.

In step S109, the X2 interface communication unit 140 of the radio base station eNB10-2 transmits the Handover Request Ack message including the information on the second entire throughput satisfied level to the radio base station eNB10-1 under the control of the transmission control unit 123. The X2 interface communication unit 140 of the radio base station eNB10-1 receives the Handover Request Ack message including the information on the second entire throughput satisfied level.

In step S110, the handover control unit 122 of the radio base station eNB10-1 determines whether the first entire throughput satisfied level is smaller than the second entire throughput satisfied level.

When the first entire throughput satisfied level is equal to or more than the second entire throughput satisfied level, a series of operations are completed. Meanwhile, when the first entire throughput satisfied level is smaller than the second entire throughput satisfied level, the radio communication unit 110 of the radio base station eNB10-1 transmits the Handover command message to the radio terminal UE30-1 to be handed over through the antenna unit 101, in step S111. The radio communication unit 210 of the radio terminal UE30-1 to be handed over receives the Handover command message. Then, the radio terminal UE30-1 to be handed over performs a handover procedure for switching a connection destination from the radio base station eNB10-1 to the radio base station eNB10-2.

### (6) Operation and effect

As described above, according to the present embodiment, each radio terminal UE30-1 connected to the radio base station eNB10-1 measures throughput at the time of execution of its own application, and transmits information on a throughput satisfied level, which indicates the degree of actually measured throughput relative to required throughput to the radio base station eNB10-1. The radio base station eNB10-1 receives the information on the throughput satisfied level from each radio terminal UE30-1.

Moreover, when the first entire throughput satisfied level, which indicates an entire throughput satisfied level of each radio terminal UE30-1, is smaller than the first threshold value, and the first entire throughput satisfied level is smaller than the second entire throughput satisfied level indicating an entire throughput satisfied level of each radio terminal UE30-2 connected to the radio base station eNB10-2, the radio base station eNB10-1 selects one of radio terminals UE30-1 as an object to be handed over, and transmits the Handover command message to the radio terminal UE30-1, thereby performing a handover procedure for switching a connection destination to the radio base station eNB10-2.

Consequently, in the handover of the radio terminal UE30-1, the radio base station eNB10-1 is able to perform appropriate control for equalizing throughput between radio base stations eNB by considering throughput in the radio terminal UE30-1.

In the present embodiment, the radio base station eNB10-1 is able to consider an entire throughput satisfied level of radio terminals UE30-1 connected to the radio base station eNB10-1. Consequently, in handover for equalizing throughput between radio base stations eNB, the radio base station eNB10-1 is able to perform more appropriate control.

In the present embodiment, the radio terminal UE30-1 performs weighting on a throughput satisfied level such that a fulfillment level is high as a codec rate of data to be transmitted at the time of execution of an application is high. When the radio terminal UE30-1 executes an application for reproducing voice or a moving picture, since the quality of the voice or the moving picture is high as a codec rate is high, a fulfillment level of a user is high. The fulfillment level of the user, changed according to the codec rate, is reflected in a throughput satisfied level, so that it is possible to allow the throughput satisfied level to approximate to the feeling of a user.

### (7) Other embodiments

As described above, the present invention has been described with the embodiments. However, it should not be understood that those descriptions and drawings constituting a part of the present disclosure limit the present invention. Further, various substitutions, examples, or operational techniques shall be apparent to a person skilled in the art on the basis of this disclosure.

In the aforementioned embodiment, the radio terminal UE30-1 calculated a throughput satisfied level by diving actually measured throughput by required throughput. However, the throughput satisfied level may be corrected as follows.

That is, when data (data to be processed) to be used in an application is transmitted from the radio base station eNB10-1, input to the storage unit 230 of the radio terminal UE30-1, and then is output, the throughput satisfied level information generation unit 222 calculates the difference between an input speed and an output speed of the data to be processed in the storage unit 230. Moreover, when the calculated difference is in a predetermined range, even though the throughput satisfied level calculated by diving the actually measured throughput by the required throughput is smaller than 1, the throughput satisfied level information generation unit 222 sets the throughput satisfied level to 1, that is, sets a throughput satisfied level indicating that the actually measured throughput satisfies the required throughput.

Furthermore, in the aforementioned embodiment, the throughput satisfied level information generation unit 222 performed weighting corresponding to a codec rate on a value obtained by diving the actually measured throughput by the required throughput. However, the weighting may not be performed.

Furthermore, in the aforementioned embodiment, the radio base station eNB10-1 calculated the first entire throughput satisfied level, which indicates an entire throughput satisfied level of each radio terminal UE30-1, and performed a handover procedure on the basis of the first entire throughput satisfied level. However, the radio base station eNB10-1 may perform a handover procedure of a single radio terminal UE30-1 on the basis of throughput satisfied level information of the single radio terminal UE30-1 from the single radio terminal UE30-1. In this case, when the throughput satisfied level from the single radio terminal UE30-1 is smaller than a predetermined threshold value and the first entire throughput satisfied level is smaller than the second entire throughput satisfied level, the handover control unit 122 of the radio base station eNB10-1 transmits the Handover command message to the single radio terminal UE30-1.

In addiction, in the LTE-Advanced, since it is predicted that a relay node, which is a radio base station configuring a backhaul in a radio manner, is employed and an X2 interface is employed in the relay node, the relay node may be used as a second radio base station according to the present invention.

In the aforementioned embodiment, the case, in which the backhaul is the X2 interface, was described. However, even when the backhaul is an S1 interface or the backhaul is the X2 interface and the S1 interface, the present invention can be applied in the same manner. When the backhaul is the S1 interface, each radio base station eNB includes an S1 interface communication unit.

Moreover, in the aforementioned embodiment, the LTE system was described. However, the present invention may also be applied to a radio communication system based on WiMAX (IEEE 802.16), or other radio communication systems.

Thus, it must be understood that the present invention includes various embodiments that are not described herein. Therefore, the present invention is limited only by the specific features of the invention in the scope of the claims reasonably evident from the disclosure above.

In addition, the entire content of Japanese Patent Application No. 2010-131886 (filed on June 9, 2010) is incorporated in the present specification by reference.

### [Industrial Applicability]

According to the present invention, it is possible to provide a radio communication system, a radio base station, and a communication control method, by which it is possible to perform appropriate handover by considering throughput in a radio terminal.

## Claims

1. A radio communication system comprising: a radio base station; and a radio terminal connected to the radio base station, wherein
the radio terminal comprises:
a transmission unit configured to transmit first information on an execution state of an application in the radio terminal to the radio base station,
the first information indicates a degree of throughput when the radio terminal performed the application relative to throughput required when the radio terminal performs the application, and
the radio base station comprises:
a reception unit configured to receive the first information from the radio terminal; and
a control unit configured to perform a handover procedure for the radio terminal on the basis of the first information received by the reception unit.

2. The radio communication system according to claim 1, wherein,
the control unit performs a handover procedure for switching a connection destination of the radio terminal from the radio base station to another radio base station, when the degree, indicated by the first information, of the throughput when the radio terminal performed the application relative to the throughput required when the radio terminal performs the application is smaller than a predetermined value.

3. The radio communication system according to claim 1 or 2, wherein
the radio base station comprises: a switch unit configured to transmit the first information to the another radio base station, and configured to receive second information on an execution state of an application in another radio terminal, which is connected to the another radio base station, from the another radio base station, and
the second information indicates a degree of throughput when the another radio terminal performed the application relative to throughput required when the another radio terminal performs the application.

4. The radio communication system according to claim 3, wherein,
the control unit performs a handover procedure for switching a connection destination of the radio terminal from the radio base station to the another radio base station, when the degree, indicated by the first information, of the throughput when the radio terminal performed the application relative to the throughput required when the radio terminal performs the application is smaller than the degree, indicated by the second information received by the switch unit, of the throughput when the another radio terminal performed the application relative to the throughput required when the another radio terminal performs the application,.

5. The radio communication system according to any one of claims 1 to 4, wherein
the radio base station is connected to a plurality of radio terminals,
the control unit acquires third information on an execution state of an application in the whole of the plurality of radio terminals on the basis of the first information from each of the plurality of radio terminals,
the third information indicates a degree of throughput when the plurality of radio terminals performed the application relative to throughput required when the plurality of radio terminals perform the application, and
the control unit performs a handover procedure for the radio terminal on the basis of the third information.

6. The radio communication system according to any one of claims 1 to 5, wherein
the radio terminal comprises: a storage unit configured to store data to be processed in an execution of the application, and
the transmission unit transmits the first information to the radio base station, which indicates the throughput when the radio terminal performed the application satisfies the throughput required when the radio terminal performs the application, when a difference between an input speed of data to the storage and an output speed of data from the storage unit is in a predetermined range.

7. The radio communication system according to any one of claims 1 to 6, wherein the degree of the throughput when the radio terminal performed the application relative to the throughput required when the radio terminal performs the application is subject to weighting corresponding to a codec rate of the data to be processed in the execution of the application.

8. A radio communication system comprising: a radio base station; and a radio terminal connected to the radio base station, wherein
the radio terminal comprises:
a transmission unit configured to transmit information on an execution state of an application in the radio terminal to the radio base station,
the information indicates a degree of throughput when the radio terminal performed the application relative to throughput required when the radio terminal performs the application, and
the radio base station comprises:
a reception unit configured to receive the information from the radio terminal.

9. A radio base station connected to a radio terminal, comprising:
a reception unit configured to receive information on an execution state of an application in the radio terminal from the radio terminal; the information being indicative of a degree of throughput when the radio terminal performed the application relative to throughput required when the radio terminal performs the application, and
a control unit configured to perform a handover procedure for the radio terminal on the basis of the information received by the reception unit.

10. A radio terminal connected to a radio base station, comprising:
a transmission unit configured to transmit information on an execution state of an application in the radio terminal to the radio base station, wherein
the information indicates a degree of throughput when the radio terminal performed the application relative to throughput required when the radio terminal performs the application.

11. A communication control method in a radio communication system including a radio base station and a radio terminal connected to the radio base station, comprising the steps of:
transmitting, by the radio terminal, information on an execution state of an application in the radio terminal to the radio base station;
the information being indicative of a degree of throughput when the radio terminal performed the application relative to throughput required when the radio terminal performs the application,
receiving, by the radio base station, the information from the radio terminal; and
performing, by the radio base station, a handover procedure for the radio terminal on the basis of the received information.
